# EUROPÄISCHE PATENTANMELDUNG

(11) **EP 1 069 339 A1**
(43) Veröffentlichungstag der Anmeldung: **17.01.2001**
(21) Anmeldenummer: 00114465.8
(22) Anmeldetag: 06.07.2000
(51) Int. Cl.: F16F 13/26

(54) **Hydraulisch dämpfendes Lager**

(30) Priorität: 13.07.1999 DE 19932584
(71) Anmelder: Firma Carl Freudenberg, 69469 Weinheim (DE)
(72) Erfinder: Hamaekers, Arno, 69517 Gorxheimertal (DE); Simuttis, Arnold, Dr., 55545 Bad Kreuznach (DE); Rudolf, Hans-Joachim, 26935 Stadland (DE)

(57) **Zusammenfassung**

Hydraulisch dämpfendes Lager mit einem ersten Verankerungsteil (2), einem beweglich zu diesem angeordneten zweiten Verankerungsteil (3), einem zwischen dem ersten und dem zweiten Verankerungsteil (2, 3) wirkenden Federelement (6), einem mit Dämpfungsflüssigkeit gefüllten Arbeitsraum (10) und einem von diesem getrennten und über einen Dämpfungsdurchlaß (14) flüssigkeitsleitend mit dem Arbeitsraum (10) verbundenen Ausgleichsraum (11), wobei das Volumen des Arbeitsraums (10) bei einer Relativbewegung von erstem und zweitem Verankerungsteil (2, 3) verändert wird, so daß Dämpfungsflüssigkeit in dem ersten Dämpfungsdurchlaß (14) zwischen Ausgleichsraum (11) und Arbeitsraum (10) bewegt wird, wobei in der Dämpfungsflüssigkeit des Arbeitsraums (10) ein Verdränger (16) angeordnet ist, wobei eine Stellvorrichtung (33) vorgesehen ist, durch die die Wechselwirkungen zwischen Dämpfungsflüssigkeit und Verdränger (16) veränderbar sind.

## Beschreibung

### Technisches Gebiet

Die Erfindung betrifft ein hydraulisch dämpfendes Lager mit einem ersten Verankerungsteil, einem beweglich zu diesem angeordneten zweiten Verankerungsteil, einem zwischen dem ersten und dem zweiten Verankerungsteil wirkenden Federelement, einem mit Dämpfungsflüssigkeit gefüllten Arbeitsraum und einem von diesem getrennten und über einen Dämpfungsdurchlaß flüssigkeitsleitend mit dem Arbeitsraum verbundenen Ausgleichsraum, wobei das Volumen des Arbeitsraums bei einer Relativbewegung von erstem und zweitem Verankerungsteil verändert wird, so daß Dämpfungsflüssigkeit in dem Dämpfungsdurchlaß zwischen Ausgleichsraum und Arbeitsraum bewegt wird, und wobei in der Dämpfungsflüssigkeit des Arbeitsraums ein Verdränger angeordnet ist.

### Stand der Technik

Ein solches hydraulisch dämpfendes Lager ist aus der DE 38 28 132 A1 bekannt.

Derartige Lager werden insbesondere zur Lagerung von Verbrennungsmotoren in Kraftfahrzeugen eingesetzt. Dabei wird durch den Verdränger in dem Arbeitsraum ein Flüssigkeitsraum geschaffen, in dem die Dämpfungsflüssigkeit in Resonanz geraten kann. Dieser Effekt wird dafür ausgenutzt, um durch das Lager Schwingungen, die der Resonanzfrequenz des Flüssigkeitsraums entsprechen, zu isolieren. Nachteil ist hierbei, daß die Schwingungsisolation noch nicht optimal ist, da durch den von dem Verdränger gebildeten Resonanzraum nur eine diskrete Frequenz isoliert werden kann.

### Darstellung der Erfindung

Der Erfindung liegt die Aufgabe zugrunde, ein hydraulisch dämpfendes Lager mit verbesserten Schwingungsisolationseigenschaften anzugeben.

Diese Aufgabe wird bei einem hydraulisch dämpfenden Lager der eingangs genannten Art dadurch gelöst, daß eine Stellvorrichtung vorgesehen ist, durch die die Wechselwirkungen zwischen Dämpfungsflüssigkeit und Verdränger veränderbar sind.

Indem durch die Stellvorrichtung die Wechselwirkung zwischen Dämpfungsflüssigkeit und Verdränger verändert wird, können auch die Eigenschaften des Flüssigkeitsraums dahingehend verändert werden, daß die Resonanzfrequenz der Dämpfungsflüssigkeit in dem Flüssigkeitsraum verändert wird. Infolgedessen können durch das erfindungsgemäße hydraulisch dämpfende Lager Schwingungen mit im Betrieb veränderbaren Frequenzen wirksam isoliert werden. Die Stellvorrichtung kann durch eine Steuereinheit betätigt werden, die in Abhängigkeit von der Motordrehzahl entsprechende Steuersignale generiert.

Gemäß einer vorteilhaften Ausgestaltung der Erfindung ist vorgesehen, daß der Verdränger den Arbeitsraum in zwei Sektionen unterteilt, die über wenigstens einen Durchgang für Dämpfungsflüssigkeit miteinander in Verbindung stehen. Dabei bildet insbesondere die durch den Verdränger und das Federelement begrenzte Sektion des Arbeitsraums den Flüssigkeitsraum, in dem die Dämpfungsflüssigkeit in Schwingung versetzt werden kann. Schwingungen der Dämpfungsflüssigkeit in dieser Sektion werden dadurch erleichtert, daß das Federelement als Blähfeder wirkt und somit eine elastisch nachgiebige Begrenzungswand für den Flüssigkeitsraum bildet. Beim Aufbringen einer Schwingungsbelastung auf das Lager wird die Dämpfungsflüssigkeit zum Fließen zwischen der ersten und zweiten Sektion durch den Durchgang gezwungen.

In einer Weiterbildung dieses Erfindungsgedankens ist vorgesehen, daß der wenigstens eine Durchgang durch ein Verschlußelement der Stellvorrichtung ganz oder teilweise verschließbar ist. Hierdurch können auf einfache Weise die Wechselwirkungen zwischen Dämpfungsflüssigkeit und Verdränger verändert werden.

Die Resonanzfrequenz der im Flüssigkeitsraum aufgenommenen Dämpfungsflüssigkeit kann besonders wirksam dadurch verändert werden, daß der wenigstens eine Durchgang in dem Verdränger insbesondere kanalförmig ausgebildet ist.

Vorteilhafterweise verläuft der Durchgang im wesentlichen parallel zur Lagerachse.

Die Herstellung und Montage des Lagers wird dadurch vereinfacht, daß das Verschlußelement auf der dem zweiten Verankerungsteil zugewandten Seite des Verdrängers angeordnet ist.

Eine gute Führung des Verschlußelements wird dadurch erzielt, daß das Verschlußelement in einer in einem radial umlaufenden Wulst des Verdrängers ausgebildete Nut geführt ist.

Gemäß einer besonders vorteilhaften Ausgestaltung der Erfindung ist vorgesehen, daß das Verschlußelement eine relativ zu dem Durchgang drehbare Lochblende ist.

Eine automatische Veränderung der Wechselwirkungen zwischen Dämpfungsflüssigkeit und Verdränger ist dadurch möglich, daß die Stellvorrichtung einen Motor, insbesondere einen Schrittmotor aufweist, der auf das Verschlußelement einwirkt.

Indem der Motor an dem ersten Verankerungsteil an dessen dem zweiten Verankerungsteil abgewandten Seite gelagert ist, wird eine besonders kompakte Konstruktion des Lagers geschaffen.

Gemäß einer Weiterbildung dieses Erfindungsgedankens weist der Motor eine Stellwelle auf, die sich durch das erste Verankerungsteil zu dem Verschlußelement erstreckt.

Eine weitere Verbesserung des Lagers wird dadurch erzielt, daß der Verdränger als ein Anschlag ausgebildet ist, der die Bewegung zwischen erstem und zweitem Stützkörper begrenzt.

### Kurzbeschreibung der Zeichnungen

Der Gegenstand der Erfindung wird nachfolgend anhand eines in der Zeichnung dargestellten Ausführungsbeispiels weiter verdeutlicht.

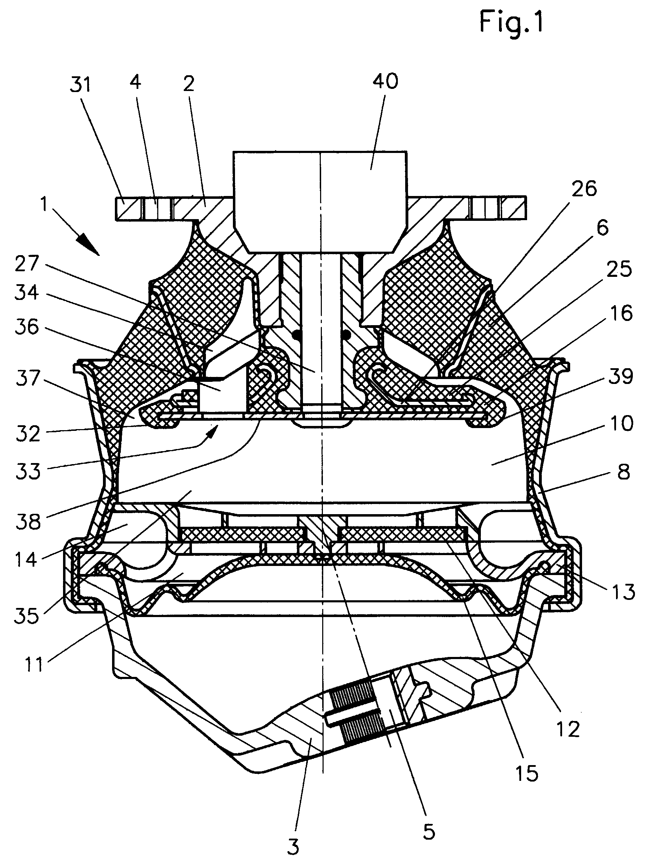

Fig. 1 zeigt einen Querschnitt durch ein erfindungsgemäßes Lager.

In Fig. 1 ist ein hydraulisch dämpfendes Lager 1 mit einem ersten Verankerungsteil 2 und einem relativ zu dem ersten Verankerungsteil beweglichen zweiten Verankerungsteil 3 dargestellt. Über die aus Metall bestehenden ersten und zweiten Verankerungsteile 2, 3 kann das Lager z.B. einerseits mit einem Motor und andererseits mit einem Chassis eines Kraftfahrzeugs verbunden werden, wobei eine Befestigung über die Bohrungen 4 und 5 erfolgt. Die Bohrungen 4 sind dabei in einem Flansch 31 vorgesehen, der an dem ersten Verankerungsteil 2 ausgebildet ist.

Zwischen dem ersten und zweiten Verankerungsteil 2, 3 ist ein Federelement 6 vorgesehen, welches als Gummikörper ausgebildet ist. Der ringförmige Gummikörper hat im wesentlichen die Form eines hohlen Kegelstumpfs, wobei das in radialer Richtung äußere Ende mit dem zweiten Verankerungsteil 3 das in radialer Richtung innere Ende mit dem ersten Verankerungsteil 2 verbunden ist. Dabei kann das Federelement 6 durch Vulkanisieren mit dem ersten und dem zweiten Verankerungsteil 2, 3 verbunden sein. In dem das Federelement 6 bildenden Gummikörper ist ein Stützring 7 aufgenommen, der den Gummikörper in einen radial inneren inneliegenden und einen radial äußeren außenliegenden Abschnitt unterteilt.

Das zweite Verankerungsteil 3 weist einen Gehäuseabschnitt 8 auf, der die Lagerachse 9 ringförmig umschließt. An dem dem ersten Verankerungsteil zugewandten Ende des Gehäuseabschnitts 8 ist das Federelement 6 festgelegt.

In dem durch den Gehäuseabschnitt 8 umgrenzten Raum ist ein Arbeitsraum 10 und ein Ausgleichsraum 11 ausgebildet. Der Arbeitsraum ist von dem Ausgleichsraum durch eine Trennwand 12, welche an einen Stützkörper 13 gelagert ist, getrennt. Dabei sind der Arbeitsraum 10 und der Ausgleichsraum 11 mit Dämpfungsflüssigkeit gefüllt und über einen Dämpfungskanal 14 flüssigkeitsleitend miteinander verbunden.

Der Arbeitsraum 10 wird durch das ersten Verankerungsteil 2, das Federelement 6, den Gehäuseabschnitt 8, die Trennwand 12 und den Stützkörper 13 begrenzt. Der Ausgleichsraum 11 wird durch die dem Arbeitsraum 10 abgewandte Seite der Trennwand 12 und des Stützkörpers 13 sowie durch eine als Rollbalg ausgebildete elastische Membran 15 begrenzt.

An dem ersten Verankerungsteil 2 ist ein sich in dem Arbeitsraum 10 erstreckender Verdränger 16 in der Dämpfungsflüssigkeit angeordnet. Der Verdränger 16 ist zusammen mit dem Verankerungsteil 2 relativ zu dem zweiten Verankerungsteil 3 bewegbar.

Bei einer Relativbewegung zwischen dem ersten Verankerungsteil 2 und zweiten Verankerungsteil 3 wird das Volumen des mit Dämpfungsflüssigkeit vollständig gefüllten Arbeitsraums 10 verändert, so daß Dämpfungsflüssigkeit durch den Dämpfungskanal 14 zwischen dem Arbeitsraum 10 und dem Ausgleichsraum 11 bewegt wird. Die elastische Membran 15 ermöglicht es, daß in dem vollständig mit Dämpfungsflüssigkeit gefüllten Ausgleichsraum 11 ein veränderliches Volumen der Dämpfungsflüssigkeit aufgenommen werden kann. Bei Einleitung von Schwingungen in das Lager 1, wird eine Schwingungsreduzierung dadurch erzielt, daß die in dem Dämpfungskanal 14 aufgenommene Dämpfungsflüssigkeit gleichfalls in Schwingungen versetzt wird, wenn die Eigenfrequenz der Dämpfungsflüssigkeit in dem Dämpfungskanal 14 angeregt wird. Hierbei ist es für eine gute Schwingungsisolierung von Vorteil, wenn die Masse der in dem Flüssigkeitskanal 14 bewegten Dämpfungsflüssigkeit möglichst groß ist. Dies kann durch einen besonders langen Dämpfungskanal 14 erreicht werden.

Im unbelasteten, ausgefederten Zustand des Lagers 1, welcher in Fig. 1 dargestellt ist, liegt der Verdränger 16 an dem Federelement 6 an. Bei belastetem, teilweise eingefedertem Lager 1 befindet sich der Verdränger in einem in axialer Lagerrichtung mittleren Abschnitt des Arbeitsraums 10.

An dem Lager 1 ist eine Stellvorrichtung 33 vorgesehen, durch die die Wechselwirkungen zwischen Dämpfungsflüssigkeit und Verdränger 16 veränderbar sind.

Der Verdränger 16 unterteilt den Arbeitsraum 10 in zwei Sektionen 34 und 35. Die Sektion 34 wird im wesentlichen durch das Federelement 6 und den Verdränger 16 begrenzt, während die zweite Sektion 35 den zwischen Verdränger 16 und der Trennwand 12 liegenden Bereich des Arbeitsraums 10 umfaßt. Die Sektion 34 und Sektion 35 sind durch einen in dem Verdränger 16 ausgebildeten kanalförmigen Durchgang 36 miteinander flüssigkeitsleitend verbunden. Ein weiterer Durchgang 37 wird im teilweise eingefederten Zustand des Lagers 1 zwischen dem radial äußeren Bereich des Verdrängers 16 und dem dazu benachbarten Federelement 6 gebildet.

Der in dem Verdränger ausgebildete Durchgang 36 kann durch ein Verschlußelement 38 der Stellvorrichtung 33 ganz oder teilweise verschlossen werden. Dieses ist auf der dem zweiten Verankerungsteil 3 zugewandten Seite des Verdrängers 16 angeordnet und als eine relativ zu dem Durchgang 36 drehbare Lochblende ausgebildet. Dabei wird das Verschlußelement 38 in einer in einem radial umlaufenden Wulst 39 des Verdrängers 16 ausgebildeten Nut geführt. Das Verschlußelement 38 kann über eine Stellwelle 40 gedreht werden. Diese ist an einem Ende mit dem Verschlußelement 38 verbunden und erstreckt sich durch das erste Verankerungsteil 2 zu einem Motor 40, durch den die Stellwelle relativ zu dem ersten Verankerungsteil 2 drehbar ist. Der Motor 40, welcher auf der dem Arbeitsraum 10 abgewandten Seite des Verankerungsteils 2 gelagert ist, kann insbesondere als Schrittmotor ausgebildet sein, um das Verschlußelement in kleinen Schritten zwischen einer vollständig geöffneten und einer vollständig geschlossenen Position bewegen zu können.

Der Verdränger 16 besteht im wesentlichen aus Elastomer 25 und weist einen in diesen eingebetteten Stützkörper 26 aus Metall auf. Die ersten und zweiten Anlageabschnitte 22 und 23 sind einstückig mit dem Körper des Verdrängers 16 aus Elastomer 25 gebildet. Der Verdränger 16 über einen Zapfen 27 an dem ersten Verankerungsteil 2 befestigt.

Der Verdränger 16 teilt im teilweise eingefederten Zustand des Lagers 1 in dem Arbeitsraum 10 einen zu dem Federelement 6 benachbarten Flüssigkeitskanal ab. Dabei sind die der Lagerachse 9 zugewandten Seite des Federelements 6 und die dem Federelement 6 zugewandte Seite des Verdrängers 16 wenigstens abschnittweise im wesentlichen parallel ausgebildet.

Der Flüssigkeitskanal kann über eine Öffnung 29 mit dem übrigen Arbeitsraum 10 verbunden sein. In dem dargestellten Ausführungsbeispiel ist die Öffnung 29 durch den zweiten Anlageabschnitt 23 des Verdrängers 16 verschlossen. Da dieser jedoch nachgiebig ausgebildet ist, wird die Öffnung 29 freigegeben, sobald sich ein erheblicher Druckunterschied zwischen dem zweiten Abschnitt 18 des Dämpfungskanal 14 und dem Flüssigkeitskanal 28 aufbaut. Eine solche Öffnung könnte jedoch auch in dem Körper des Verdrängers 16 ausgebildet sein (nicht dargestellt).

Die den Arbeitsraum 10 von dem Ausgleichsraum 11 trennende Trennwand 12 ist als elastische Membran ausgebildet. Sie ist beidseitig mit Dämpfungsflüssigkeit beaufschlagt. Die Trennwand 12 wird dabei durch Halteabschnitte 30 des Stützkörpers 13 in Position gehalten.

Der Verdränger 16 ist als Anschlag ausgebildet, welcher die Bewegung zwischen erstem und zweitem Verankerungsteil 2, 3 begrenzt. In seiner unteren Position (nicht dargestellt) liegt der Verdränger an dem Stützkörper 13 mit seinen elastomeren Anschlagflächen 32 an.

## Patentansprüche

1. Hydraulisch dämpfendes Lager mit einem ersten Verankerungsteil (2), einem beweglich zu diesem angeordneten zweiten Verankerungsteil (3), einem zwischen dem ersten und dem zweiten Verankerungsteil (2, 3) wirkenden Federelement (6), einem mit Dämpfungsflüssigkeit gefüllten Arbeitsraum (10) und einem von diesem getrennten und über einen Dämpfungsdurchlaß (14) flüssigkeitsleitend mit dem Arbeitsraum (10) verbundenen Ausgleichsraum (11), wobei das Volumen des Arbeitsraums (10) bei einer Relativbewegung von erstem und zweitem Verankerungsteil (2, 3) verändert wird, so daß Dämpfungsflüssigkeit in dem Dämpfungsdurchlaß zwischen Ausgleichsraum (11) und Arbeitsraum (10) bewegt wird, wobei in der Dämpfungsflüssigkeit des Arbeitsraums (10) ein Verdränger (16) angeordnet ist, **dadurch gekennzeichnet,** daß eine Stellvorrichtung (33) vorgesehen ist, durch die die Wechselwirkungen zwischen Dämpfungsflüssigkeit und Verdränger (16) veränderbar sind.

2. Lager nach Anspruch 1, dadurch gekennzeichnet, daß der Verdränger (16) den Arbeitsraum (10) in zwei Sektionen (34, 35) unterteilt, die über wenigstens einen Durchgang (36, 37) für Dämpfungsflüssigkeit miteinander in Verbindung stehen.

3. Lager nach Anspruch 2, dadurch gekennzeichnet, daß der wenigstens eine Durchgang (36, 37) durch ein Verschlußelement (38) der Stellvorrichtung (33) ganz oder teilweise verschließbar ist.

4. Lager nach Anspruch 2 oder 3, dadurch gekennzeichnet, daß der Durchgang (36) in dem Verdränger (16) insbesondere kanalförmig ausgebildet ist

5. Lager nach Anspruch 4, dadurch gekennzeichnet, daß der Durchgang (36) im wesentlichen parallel zur Lagerachse verläuft.

6. Lager nach einem der Ansprüche 4 oder 5, dadurch gekennzeichnet, daß das Verschlußelement (38) auf der dem zweiten Verankerungsteil (3) zugewandten Seite des Verdrängers (16) angeordnet ist.

7. Lager nach einem der Ansprüche 4 bis 6, dadurch gekennzeichnet, daß das Verschlußelement (38) in einer in einem radial umlaufenden Wulst (39) des Verdrängers (16) ausgebildeten Nut geführt ist.

8. Lager nach einem der Ansprüche 4 bis 7, dadurch gekennzeichnet, daß das Verschlußelement (38) eine relativ zu dem Durchgang (36) drehbare Lochblende ist.

9. Lager nach einem der Ansprüche 1 bis 8, dadurch gekennzeichnet, daß die Stellvorrichtung (33) einen Motor (40), insbesondere einen Schrittmotor, aufweist, der auf Verschlußelement (38) einwirkt.

10. Lager nach Anspruch 9, dadurch gekennzeichnet, daß der Motor (40) an dem erstem Verankerungsteil (2) gelagert ist.

11. Lager nach Anspruch 9 oder 10, dadurch gekennzeichnet, daß der Motor (40) eine Stellwelle aufweist, die sich durch das erste Verankerungsteil (2) zu dem Verschlußelement (38) erstreckt.

12. Lager nach einem der Ansprüche 1 bis 11, dadurch gekennzeichnet, daß der Verdränger (16) als ein Anschlag ausgebildet ist, der die Bewegung zwischen ersten und zweitem Verankerungsteil (2, 3) begrenzt.

13. Lager nach einem der Ansprüche 1 bis 12, dadurch gekennzeichnet, daß der Verdränger (16) an dem ersten Verankerungsteil (2) festgelegt ist.
